# EUROPÄISCHE PATENTANMELDUNG

(11) **EP 1 209 102 A1**
(43) Veröffentlichungstag der Anmeldung: **29.05.2002**
(21) Anmeldenummer: 00811100.7
(22) Anmeldetag: 21.11.2000
(51) Int. Cl.: B65G 47/14

(54) **Vereinzelungsvorrichtung für Stangen**

(71) Anmelder: Agathon AG Maschinenfabrik, 4503 Solothurn (CH)
(72) Erfinder: Freudiger, Heinz, 4704 Niederbipp (CH)
(74) Vertreter: BOVARD AG - Patentanwälte

(57) **Zusammenfassung**

Eine Vereinzelungsvorrichtung für Stangen (2) umfasst einen Behälter (3), in welchen eine Menge von zu vereinzelnden Stangen (2) eingelegt ist. Der Behälter hat einen Grundbereich (18), der als zylindrische Fläche ausgebildet ist und der im Querschnitt einen Krümmungsradius (R) hat, der einem Mehrfachen eines Durchmessers (D) einer Stange (2) entspricht. In den Grundbereich (18) des Behälters (3) ist ein Längsschlitz (19) angebracht, in welchen ein Schieber (8) zu liegen kommt, der den Längsschlitz (19) ständig verschliesst. Der Schieber (8) ist von einer unteren Endlage in eine obere Endlage und umgekehrt verschiebbar. Der obere Bereich dieses Schiebers (8) ist mit einer Längsrille (20) ausgestattet, in welcher eine Stange (2a) aufnehmbar ist, welche in der oberen Endlage des Schiebers (8) durch geeignete Mittel entnehmbar ist. Mit dieser Vereinzelungsvorrichtung können insbesondere Stangen mit kleinem Durchmesser vereinzelt einer Weiterbearbeitungseinrichtung zugeführt werden.

## Beschreibung

Die vorliegende Erfindung bezieht sich auf eine Vereinzelungsvorrichtung für Stangen, die einen Durchmesser D und eine Länge L haben, gemäss dem Oberbegriff des Patentanspruchs 1.

Derartige Vereinzelungsvorrichtungen für Stangen werden eingesetzt beispielsweise vor Bearbeitungsmaschinen, in welchen jeweils eine einzel zugeführte Stange bearbeitet werden soll. Hierbei ist vor dieser Bearbeitungsmaschine ein Stangenmagazin vorgesehen, in welchem eine Anzahl Stangen als Vorrat lose eingelegt ist, und aus welcher Menge diese Einrichtung bei Bedarf jeweils eine einzelne Stange heraus holt, welche der Bearbeitungsmaschine zugeführt werden kann.

Eine derartige Vorrichtung zum Vereinzeln und zur Weitergabe von Stangenmaterial ist in der EP-A-0 979 789 dargestellt. Diese Vorrichtung weist geneigte Führungsbahnen auf, auf welchen die Stangen nebeneinander liegend angeordnet sind, und welche in den Bereich von Hubhebeln gelangen. Diese Hubhebel weisen einen Anschlagbereich auf, an welchen die vorderste Stange der Stangenreihe anstösst, sowie eine hakenförmige Fortsetzung, mittels welcher beim Verschwenken dieser Hubhebel die vorderste Stange aus der Reihe herausgehoben und auf eine Ablaufschräge gebracht wird, auf welcher die Stange selbständig abrollt.

Des weiteren sind auch Vorrichtungen zum Vereinzeln von Stangen bekannt, die mit senkrecht am Stangenlager vorbeifahrenden Fördermitteln ausgestattet sind, die Greifer aufweisen. Die Greifer heben aus dem Stangenlager eine Stange heraus, wobei auch mehr als eine Stange mitgenommen werden kann, die durch nachfolgende Abstreifer abgeworfen wird. Eine derartige Einrichtung ist beispielsweise aus der DE-A-32 33 658 bekannt.

Diese vorgenannten Einrichtungen sind geeignet für Stangen, die einen Durchmesser von beispielsweise mehr als einem Zentimeter aufweisen und ein entsprechendes Gewicht haben. Für das Vereinzeln von Stangen mit kleineren Durchmessern, insbesondere sehr kleinen Durchmessern, sind diese Einrichtungen nicht geeignet, da deren Arbeitsweise zu ungenau ist.

Die Aufgabe der Erfindung besteht nun darin, eine Vereinzelungsvorrichtung für Stangen zu schaffen, welche insbesondere ermöglicht, auch Stangen mit sehr kleinem Durchmesser, das heisst beispielsweise kleiner als 1 mm, zu vereinzeln. Hierbei soll diese Vereinzelungsvorrichtung einfach im Aufbau und günstig herstellbar sein.

Erfindungsgemäss erfolgt die Lösung dieser Aufgabe durch die im Anspruch 1 aufgeführten Merkmale.

Mit dieser erfindungsgemässen Vereinzelungsvorrichtung ist ein Vereinzeln von Stangen gewährleistet, die auch einen sehr kleinen Durchmesser haben können, beispielsweise kleiner als 0,1 mm. Diese Stangen werden beispielsweise einer Spitzenlos-Schleifmaschine zugeführt, in welcher sie auf ein genaues Mass geschliffen wird, welche Stangen dann beispielsweise als Elektroden zum Erodieren von sehr kleinen Löchern in Werkstücken verwendet werden.

In vorteilhafter Weise wird der muldenförmige Behälter aus einem Rohrkörper gebildet, der eine Einfüllöffnung für die Stangen aufweist und der mit einer vorderen Wand und einer hinteren Wand verschlossen ist. Dadurch kann eine günstige Herstellung erreicht werden.

Ein einfaches Einfüllen der in den Behälter einzugebenden, zu vereinzelnden Stangen kann dadurch erreicht werden, dass die Einfüllöffnung im wesentlichen gegenüberliegend zum Längsschlitz angebracht ist und sich im wesentlichen über die gesamte Länge des Rohrkörpers erstreckt.

Eine weitere vorteilhafte Ausgestaltung der Erfindung ergibt sich dadurch, dass die vordere Wand fest mit dem Rohrkörper verbunden ist und dass die hintere Wand im Rohrkörper längsverschiebbar ist und in jeder Längslage arretierbar ist. Dadurch kann eine Vereinzelungsvorrichtung für Stangen mit verschiedenen Längen verwendet werden.

Der Schieber ist in vorteilhafter Weise über einen Hub- und Führungsmechanismus zwischen der unteren Endlage und der oberen Endlage verschiebbar, wobei die untere Endlage und die obere Endlage einstellbar sind. Dadurch kann eine genaue Einjustierung des Schiebers auf die Stangen vorgenommen werden, wodurch eine optimale Arbeitsweise gewährleistet ist.

Eine weitere vorteilhafte Ausgestaltung der Erfindung besteht darin, dass der Schieber aus einem Tragteil und einem Schieberteil lösbar zusammengesetzt ist, und der Schieberteil durch andere Schieberteil unterschiedlicher Längen ersetzbar ist. Dadurch kann auch die Länge des Schiebers an die Länge der Stangen angepasst werden.

Um ein sicheres Aufnehmen einer Stange in der Längsrille des Schiebers zu erreichen, ist es vorteilhaft, wenn die Längsrille eine Breite aufweist, die im wesentlichen dem Durchmesser der aufzunehmenden Stange entspricht. Damit aber die Schieberbreite und somit die Breite des Längsschlitzes nicht an den jeweiligen Stangendurchmesser angepasst werden muss, ist der Schieberteil für die Entnahme von Stangen mit kleinem Durchmesser mit geneigten, einen Keil bildenden Flächen versehen, die an die Längskanten der Längsrille angrenzend sind. Dadurch lässt sich diese Vereinzelungsvorrichtung für ein Stangensortiment mit unterschiedlichem Durchmesser einsetzen, lediglich der Schieberteil muss jeweils an einen Durchmesserbereich der zu vereinzelnden Stangen angepasst werden.

Um die Stangen optimal auf dem Schieber festhalten zu können, sind im Grund der Längsrille Ansaugbohrungen angebracht, die mit einer Saugeinrichtung verbunden sind. Dadurch ist gewährleistet, dass die vom Schieber aufgenommene Stange während des Hochfahrens in die obere Endlage nicht herunter fällt.

Ein optimales Wegführen der durch den Schieber vereinzelten und angehobenen Stange erfolgt durch das Ausschieben der Stange entlang der Längsrille, was durch eine Ausschiebeanordnung durchgeführt werden kann. Diese ist in vorteilhafter Weise an einem Halteteil befestigt, welcher entlang des Behälters verschiebbar ist und in jeder Lage arretierbar ist, und bei welcher die Hubbewegung einstellbar ist. Dadurch ist man bezüglich Stangenlänge und Ausschiebhub sehr flexibel.

Um zu vermeiden, dass während des Ausschiebens entlang der Längsrille der vereinzelten Stange aus dem Schieber die Stange herunterfallen kann, ist ein Anschlagelement vorgesehen, das so angeordnet ist, dass die vom Schieber aus dem Behälter entnommene Stange in der oberen Endlage des Schiebers am Anschlagelement zur Anlage kommt. Die Stange wird somit durch die Längsrille des Schiebers und das Anschlagelement während des Ausschiebens geführt. Hierbei ist das Anschlagelement ebenfalls einstellbar und an der vorderen Wand des Behälters befestigt.

Eine Ausführungsform der Erfindung wird nachfolgend anhand der beiliegenden Zeichnung beispielhaft näher erläutert.

Es zeigt
Fig. 1 in räumlicher Darstellung eine erfindungsgemässe Vereinzelungsvorrichtung mit schematisch dargestellter Spitzenlos-Schleifeinrichtung;
Fig. 2 in räumlicher Darstellung die erfindungsgemässe Vereinzelungsvorrichtung mit weggelassener Vorderwand, wobei der Schieber in der unteren Endlage ist;
Fig. 3 eine Darstellung im Schnitt der Einrichtung, wie sie in Fig. 2 dargestellt ist;
Fig. 4 in räumlicher Darstellung die Einrichtung gemäss Fig. 2, wobei sich der Schieber in einer leicht angehobenen Position befindet;
Fig. 5 eine Schnittdarstellung der Einrichtung gemäss Fig. 4;
Fig. 6 in räumlicher Darstellung die Einrichtung gemäss Fig. 2, wobei sich der Schieber in der oberen Endlage befindet;
Fig. 7 eine Schnittdarstellung der Einrichtung gemäss Fig. 6; und
Fig. 8 bis 10 jeweils eine Querschnittdarstellung durch den Grundbereich des Behälters mit dem Schieber in der unteren Endlage, einer Zwischenlage und der oberen Endlage.

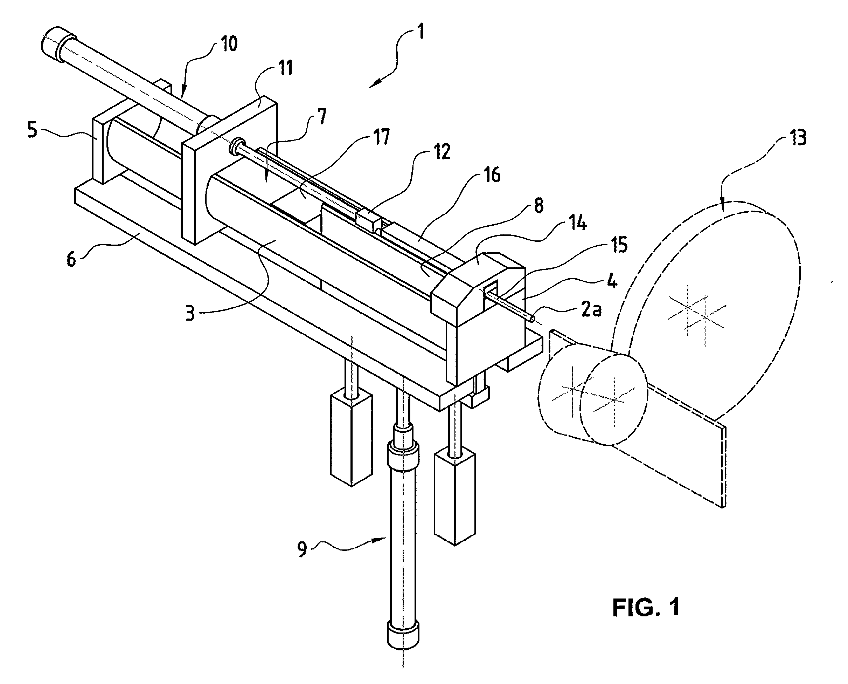

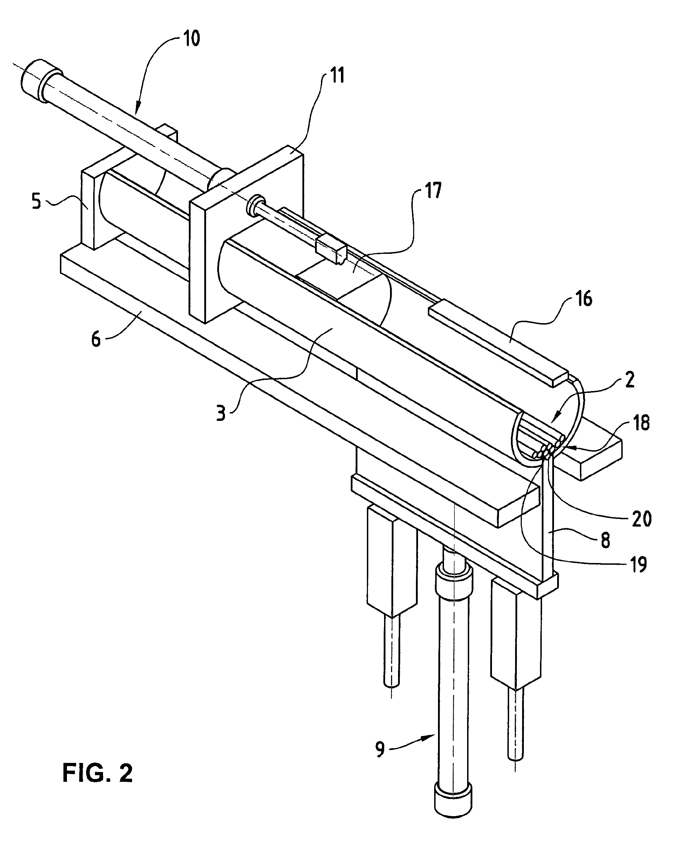

Wie aus Fig. 1 ersichtlich ist, besteht die erfindungsgemässe Vereinzelungsvorrichtung 1 für Stangen 2 (Fig. 2) aus einem muldenförmigen Behälter, einem Entnahmeteil und einer Wegführeinrichtung. Ein Rohrkörper 3, der in diesem Ausführungsbeispiel kreiszylinderförmig ausgebildet ist und der den Behälter für die Stangen bildet, ist auf der einen Stirnseite mit einer vorderen Wand 4 und auf der anderen Stirnseite mit einer Abschlusswand 5 ausgestattet. Über diese vordere Wand 4 und die Abschlusswand 5 ist der Rohrkörper 3 mit einer Grundplatte 6 verbunden. Der Rohrkörper 3 weist eine gegen oben gerichtete Einfüllöffnung 7 auf, die sich über die gesamte Länge des Rohrkörpers 3 erstreckt.

Im Rohrkörper 3 der Vereinzelungsvorrichtung 1 ist ein Schieber 8 eingesetzt, wie später im Detail noch beschrieben wird. Dieser Schieber 8 ist mit einem Hub- und Führungsmechanismus 9 verbunden, welcher an der Grundplatte 6 befestigt ist. Derartige Hub- und Führungseinrichtungen 9 sind bekannt, sie werden beispielsweise pneumatisch angetrieben und ermöglichen, dass der Schieber 8 von einer unteren Endlage in eine obere Endlage angehoben werden kann und umgekehrt. In bekannter Weise lässt sich die obere Endlage und die untere Endlage durch nicht dargestellte Einstellmittel an der Hub- und Führungseinrichtung 9 genau einstellen.

In Fig. 1 ist der Schieber 8 in der oberen Endlage dargestellt. Die in diese Lage gebrachte Stange 2a kommt hier in den Wirkungsbereich einer Wegführeinrichtung, die in diesem Ausführungsbeispiel als Ausschiebeanordnung 10 ausgebildet ist. Diese Ausschiebeanordnung 10 ist auf einem Halteteil 11 befestigt, der entlang des Rohrkörpers 3 in bekannter Weise verschiebbar und in jeder eingestellten Lage arretierbar ist. Die Ausschiebeanordnung 10, die in diesem Ausführungsbeispiel pneumatisch angetrieben ist, weist einen Ausschiebeteil 12 auf, der die Stange 2a aus dem Schieber 8 in dessen Längsrichtung ausschieben kann. Die Stange 2a steht dann über die vordere Wand 4 vor, und kann beispielsweise durch eine sehr schematisch angeordnete Spitzenlos-Schleifmaschine 13 aufgenommen und auf das gewünschte Mass geschliffen werden. Die vordere Wand 4 ist hier mit einer Abdeckung 14 versehen, die eine Führungsöffnung 15 aufweist, durch welche die Stange 2a geführt ausgestossen werden kann. An dieser Abdeckung 14 ist ein Anschlagelement 16 angebracht, an welchem die vom Schieber 8 entnommene Stange 2a in der oberen Endlage des Schiebers 8 zur Anlage kommt. Dadurch kann vermieden werden, dass die Stange 2a, da diese durch das Anschlagelement 16 und den Schieber 8 geführt ist, während des Ausschiebens herunterfallen kann.

In den Rohrkörper 3 ist ferner eine hintere Wand 17 eingesetzt, die im Rohrkörper 3 in bekannter Weise verschiebbar angebracht ist und in jeder Lage arretiert werden kann. Mit dieser hinteren Wand 17 lässt sich die Länge des die Stangen aufnehmenden Raums im Rohrkörper 3 an die Länge der Stangen anpassen.

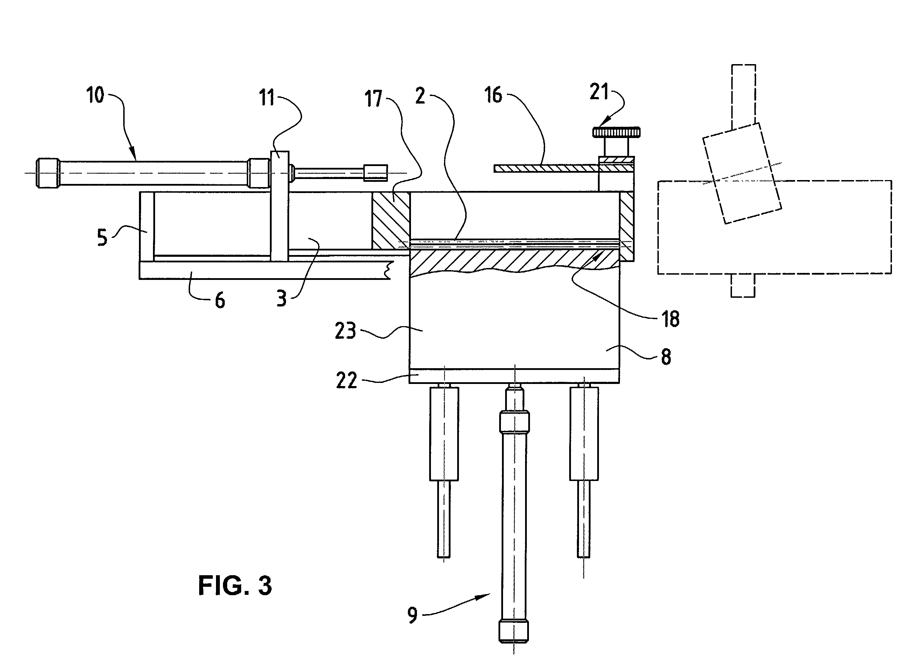

Wie aus den Fig. 2 und 3 ersichtlich ist, bei welchen sich der Schieber 8 in der unteren Endlage befindet, und wo in Fig. 2 die vordere Wand 4 (Fig. 1) mit der Abdeckung 14 aus Übersichtlichkeitsgründen weggelassen worden sind, richtet sich die Menge der eingelegten Stangen 2, die vereinzelt werden sollen, im Grundbereich 18 des Rohrkörpers 3 aus. In diesem Grundbereich 18 ist auch der Längsschlitz 19 in den Rohrkörper 3 eingelassen. Dieser Längsschlitz 19 erstreckt sich über einen Teil der Gesamtlänge des Rohrkörpers 3. Der Schieber 8 verschliesst in seiner hier dargestellten unteren Endlage den Längsschlitz 19 mit seinem oberen Randbereich, wobei sich der Schieber 8 nicht über die ganze Länge des Längsschlitzes 19 erstrecken muss. Die Oberfläche ist mit einer Längsrille 20 ausgestattet, die sich über die gesamte Länge des Schiebers 8 erstreckt, und die im Detail später noch beschrieben wird. Eine aus der Menge der Stangen 2 gelangt in die Längsrille 20 des Schiebers 8.

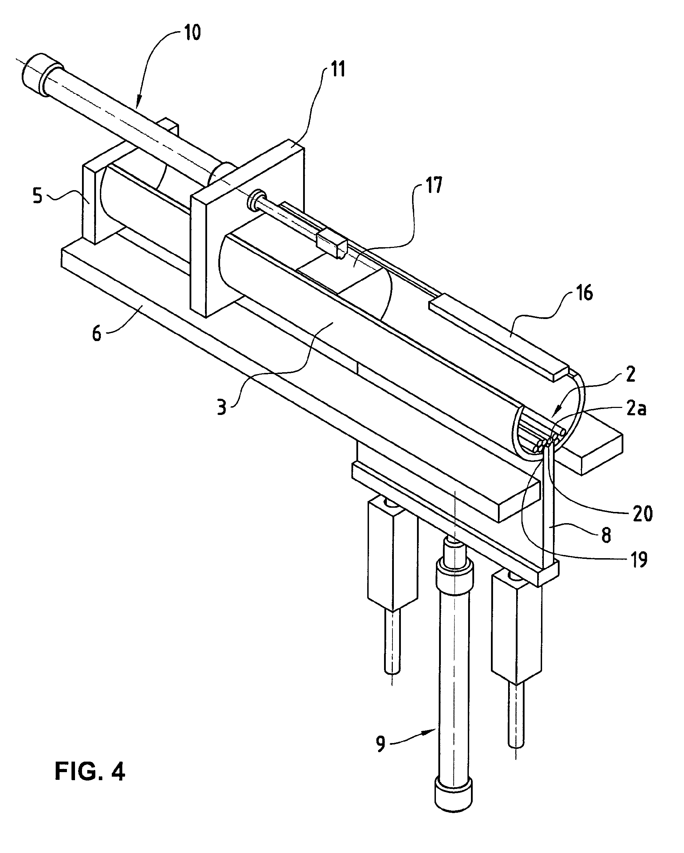

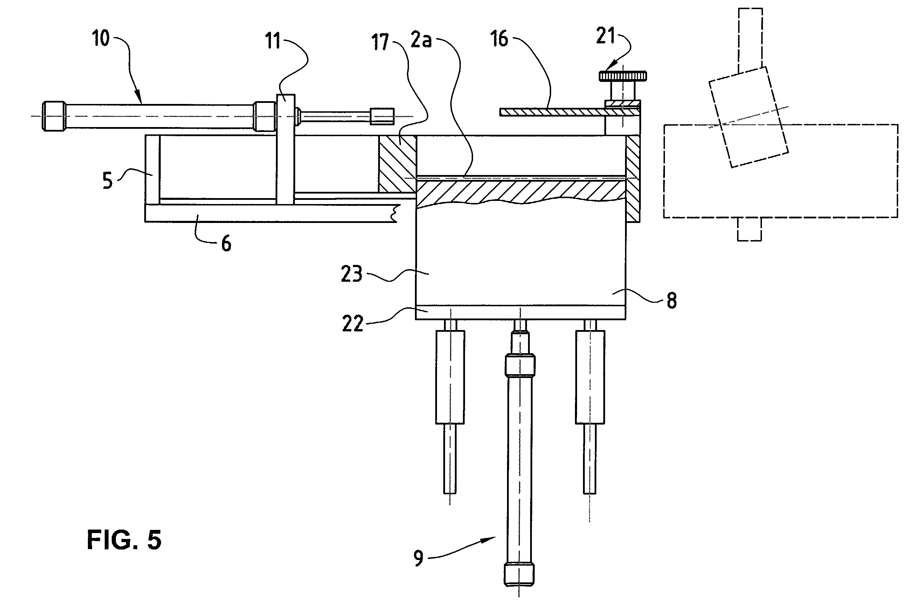

In den Fig. 4 und 5 ist eine Situation dargestellt, bei welcher der Schieber 8 um ein geringes Mass von seiner unteren Endlage angehoben wurde. Durch den oberen Bereich des Schiebers 8 mit der in der Längsrille 20 sich befindenden, heraushebbaren Stange 2a werden die anderen sich im Rohrkörper 3 befindenden Stangen 2 zur Seite geschoben. Dieses zur Seite schieben der Stangen 2 bewirkt, dass diese parallel zum Schieber 8 ausgerichtet werden. Es findet somit mit dem Herausheben einer Stange 2a ein Entwirren der übrigen Stangen 2 im Rohrkörper 3 statt.

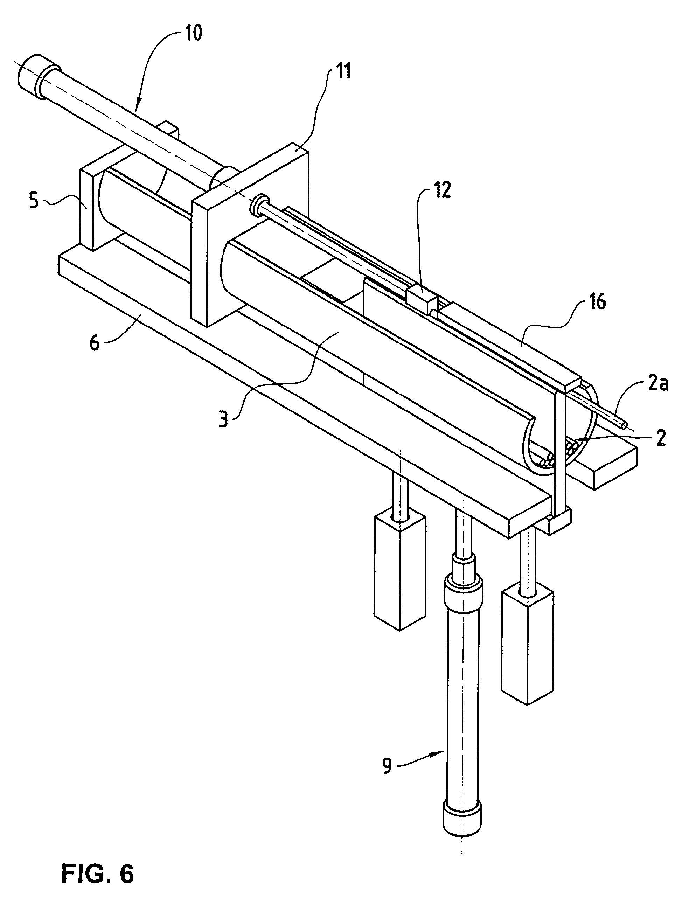

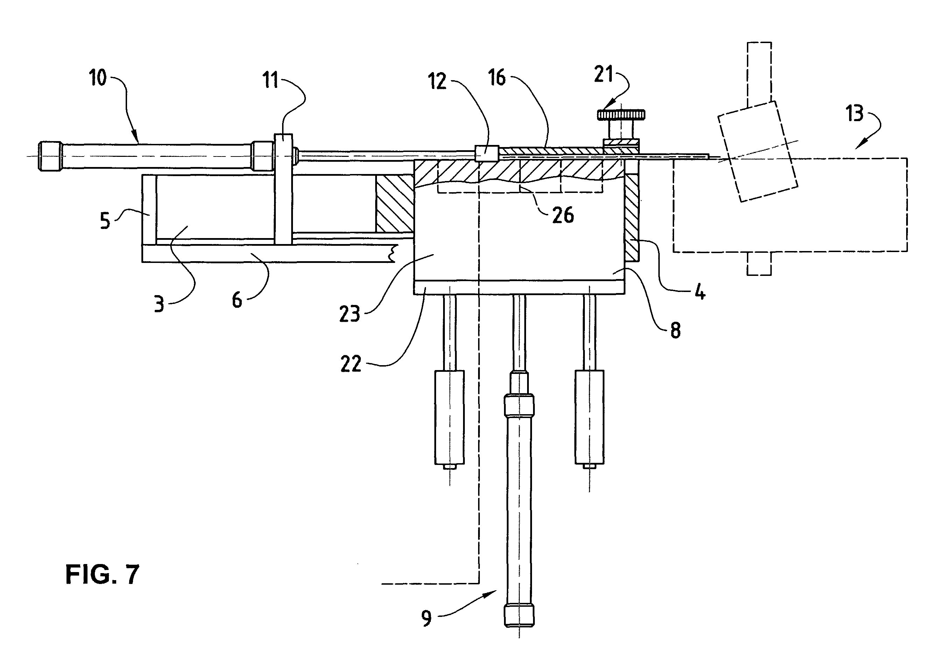

Der Schieber 8 wird dann durch die Hub- und Führungseinrichtung 9 in die obere Endlage gebracht, wie das in den Fig. 6 und 7 dargestellt ist. Die sich in der Längsrille 20 befindliche, entnommene Stange 2a stösst in dieser oberen Endlage am Anschlagelement 16 an. Danach wird die Ausschiebeanordnung betätigt, der Ausschiebeteil 12 kommt in Kontakt mit dem hinteren Ende der Stange 2a und stösst sie entlang der Längsrille 20, wobei das Anschlagelement 16 als Führungshilfe dient und vermieden wird, dass die Stange 2a hinunterfällt, durch die vordere Wand 4 aus, bis sie durch die schematisch dargestellte Schleifmaschine ergriffen und bearbeitet wird. Die Ausschiebeanordnung 10 zieht dann den Ausschiebeteil 12 wieder zurück, der Schieber 8 wird über die Hub- und Führungseinrichtung 9 in die untere Endlage zurückgefahren, die Entnahme der nächsten Stange kann beginnen.

Wie aus den Fig. 3, 5 und 7 entnehmbar ist, lässt sich das Anschlagelement 16 durch Einstellmittel 21 höhenverstellen, wodurch die optimale Position dieses Anschlagelementes 16 bezüglich der Stange 2a, die durch den Schieber 8 aufgenommen worden ist, welcher Schieber sich in der oberen Endlage befindet, optimal einstellen lässt.

Wie insbesondere den Fig. 3, 5 und 7 entnommen werden kann, ist der Schieber 8 bei dieser Ausführungsform zweiteilig ausgeführt und besteht aus einem Tragteil 22 und einem Schieberteil 23. Der Tragteil 22 ist mit der Hub- und Führungseinrichtung 9 fest verbunden. Der Schieberteil 23 ist auf den Tragteil 22 aufgesetzt und mit diesem lösbar verbunden, beispielsweise durch Verschraubung. Der Schieberteil 23 kann somit ausgewechselt werden und durch einen anderen Schieberteil ersetzt werden. Dieser andere Schieberteil kann eine andere Länge aufweisen, angepasst an die Länge der Stangen, die vereinzelt werden sollen. Wie bereits erwähnt, kann die hintere Wand 17 im Rohrkörper 3 verschoben und in jeder beliebigen Lage fixiert werden, mit dieser verschiebbaren hinteren Wand 17 und der Möglichkeit des Auswechselns des Schieberteils 23 kann diese erfindungsgemässe Vereinzelungsvorrichtung für Stangen mit unterschiedlichen Längen eingesetzt werden.

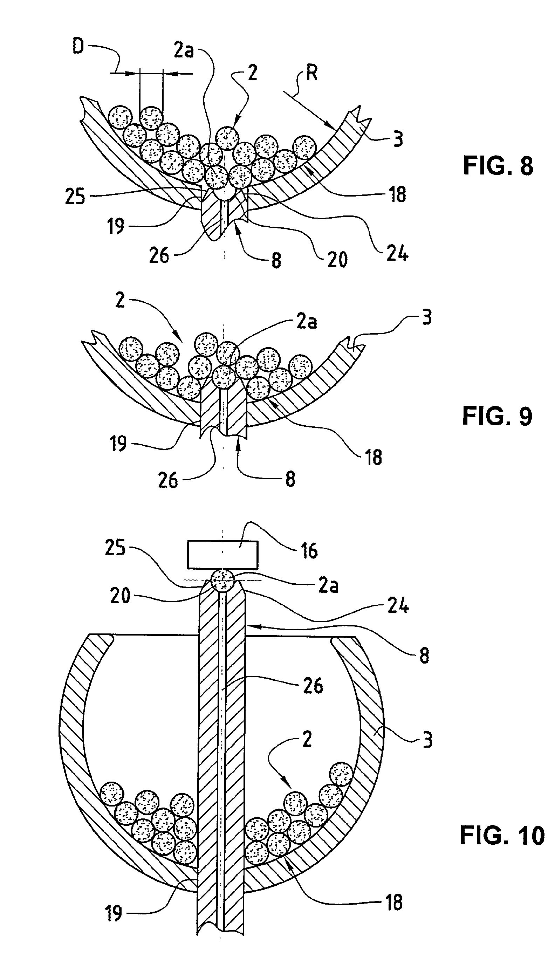

Wie insbesondere aus den Fig. 8 bis 10 ersichtlich ist, ist der Grundbereich 18 des Rohrkörpers 3 als zylindrische Fläche ausgebildet, welche im Querschnitt einen Krümmungsradius R hat, der einem Mehrfachen eines Durchmessers D einer Stange 2 entspricht. Dadurch wird erreicht, dass sich die Stangen 2 nach dem Einlegen in den Rohrkörper 3 zum Vereinzeln in diesen Grundbereich 18 gelangen. Dabei kommen sie auch in den Bereich des Schiebers 8, der sich in Fig. 8 in der unteren Endlage befindet. Dieser Schieber 8 weist eine Breite auf, die praktisch der Breite des Längsschlitzes 19 entspricht, so dass dieser Längsschlitz 19 ständig durch den Schieber 8 verschlossen ist.

Eine Stange 2a gelangt auch in den Bereich der Längsrille 20 des Schiebers 8. Beim Anheben des Schiebers 8, wie dies in Fig. 9 dargestellt ist, wird die Stange 2a vollständig in die Längsrille 20 gelangen, sie wird aus der Menge der Stangen 2 heraus angehoben. Die restlichen Stangen 2 werden durch die Ausgestaltung des Grundbereiches 18 des Rohrkörpers 3 durch den Schieber 8 und die darin befindliche Stange 2a im wesentlichen zur Seite geschoben. Hierbei erfolgt ein Ausrichten dieser Stangen 2 in Längsrichtung des Rohrkörpers 3. Die Stange 2a wird dann durch den Schieber 8 in die obere Endlage gebracht, wie dies in Fig. 10 dargestellt ist. Hierbei gelangt die Stange 2a zur Anlage mit dem Anschlagelement 16, die Stange 2a wird dann entlang der Längsrille 20, wie vorgängig beschrieben worden, ausgeschoben. Der Schieber 8 wird dann wieder in die untere Endlage zurückgefahren, entsprechend der Darstellung in Fig. 8, die Stangen 2 schieben sich wieder über den Schieber 8, eine davon gelangt in die Längsrille 20, der Vorgang kann wiederholt werden.

Es kann sein, dass die neu eingelegten Stangen 2 zu Beginn nicht so ausgerichtet sind, dass eine Stange in die Längsrille 20 gelangt. Der Schieber 8 macht dann einen Leerhub, während dieses Leerhubs werden die Stangen 2 ausgerichtet, so dass beim nächsten Hub eine Stange in die Längsrille 20 gelangt.

Wie aus den Fig. 8 bis 10 ersichtlich ist, weist die Längsrille 20 eine Breite auf, die im wesentlichen dem Durchmesser D einer Stange 2 entspricht. Die Form der Längsrille 20 kann, wie im vorliegenden Ausführungsbeispiel, zylinderförmig ausgebildet sein, sie kann aber auch die Form einer Keilnut oder eine andere geeignete Form haben. Insbesondere bei grösseren Stangendurchmessern ist es auch möglich, dass die Breite der Längsrille 20 kleiner ist als der Durchmesser der Stangen 2.

Wenn der Stangendurchmesser D kleiner ist als die Breite des Schiebers 8, kann der an die Längsrille 20 angrenzende Bereich des Schiebers mit zwei Flächen 24, 25 ausgestattet werden, die einen Keil bilden und an die Längskanten der Längsrille 20 angrenzend sind. Dadurch wird der Längsschlitz 19 des Rohrkörpers 3 weiterhin dauernd durch den Schieber 8 verschlossen, eine Entnahme einer Stange 2a aus der Menge der Stangen 2 ist trotzdem gewährleistet, wie dies auch in den Fig. 8 bis 10 ersichtlich ist. Die Stangen werden beim Hochfahren des Schiebers 8 zur Seite geschoben. Es ist auch denkbar, dass die Längsrille 20 in einen auf dem Schieber 8 aufsetzbaren Aufsetzteil eingearbeitet ist, der über die Länge des Schiebers mehrteilig sein kann, und welcher aus einem verschleissfesten Material gebildet ist.

Wie insbesondere aus den Fig. 8 bis 10 und aus Fig. 7 ersichtlich ist, können in den Schieber 8 Ansaugbohrungen 26 eingelassen sein, die in bekannter Weise mit einer Saugeinrichtung verbunden sind. Durch diese Ansaugleitungen 26 kann die Luft abgesaugt werden, die Stange 2a, die sich in der Längsrille 20 befindet, wird während des Anhebevorgangs festgehalten. Vor dem Ausschieben kann diese Ansaugung abgestellt werden.

Diese erfindungsgemässe Vereinzelungsvorrichtung ist, wie bereits erwähnt, geeignet zur Vereinzelung von Stangen, die einen kleinen Durchmesser haben, beispielsweise kleiner als ein Millimeter, sie ist aber bei entsprechender Dimensionierung auch geeignet für Stangen mit grösserem Durchmesser. Die zu vereinzelnden Stangen können aus einem beliebigen Material bestehen, diese Vereinzelungsvorrichtung kann praktisch an beliebige Bearbeitungsmaschinen für derartige Stangen angeschlossen werden, die Wegnahmeeinrichtung kann abhängig von der Zuführung an die Bearbeitungsmaschine angepasst werden, denkbar wäre auch ein Greifer eines Roboterarms, der die Stange 2a aus der Längsrille 20 des Schiebers 8 heraus zieht, gegebenenfalls unter Mithilfe der Ausschiebeanordnung 10. Der Greifer dieses Roboterarms könnte die Stange 2a auch nach oben aus der Längsrille 20 des Schiebers 8 herausheben.

## Patentansprüche

1. Vereinzelungsvorrichtung für Stangen (2), die einen Durchmesser (D) und eine Länge (L) haben, welche einen muldenförmigen Behälter, in welchem eine Menge von zu vereinzelnden Stangen (2) eingelegt ist, einen Entnahmeteil zum Entnehmen einer einzelnen Stange (2a) aus dem muldenförmigen Behälter und eine Wegführeinrichtung für diese einzelne Stange (2a) umfasst, **dadurch gekennzeichnet, dass** der muldenförmige Behälter einen Grundbereich (18) aufweist, der als zylindrische Fläche ausgebildet ist, welche im Querschnitt einen Krümmungsradius (R) hat, der einem Mehrfachen eines Durchmessers (D) einer Stange entspricht, in welchem Grundbereich (18) ein Längsschlitz (19) angebracht ist, in welchem der Entnahmeteil angeordnet ist, der als Schieber (8) ausgebildet ist und den Längsschlitz (19) mindestens über einen Teil seiner Länge ständig verschliesst, welcher im wesentlichen in radialer Richtung und im wesentlichen in senkrechter Richtung von einer unteren Endlage in eine obere Endlage und umgekehrt verschiebbar ist, dessen Oberfläche mit einer Längsrille (20) ausgestattet ist, in welcher eine Stange (2a) aufnehmbar ist, welche in der oberen Endlage des Schiebers (8) durch die Wegführeinrichtung entnehmbar ist.

2. Vereinzelungsvorrichtung nach Anspruch 1, **dadurch gekennzeichnet, dass** der muldenförmige Behälter aus einem Rohrkörper (3) gebildet ist, der eine Einfüllöffnung (7) für die Stangen (2) aufweist und der mit einer vorderen Wand (4) und einer hinteren Wand (17) verschlossen ist.

3. Vereinzelungsvorrichtung nach Anspruch 2, **dadurch gekennzeichnet, dass** die Einfüllöffnung (7) im wesentlichen gegenüberliegend zum Längsschlitz (19) angebracht ist und sich im wesentlichen über die gesamte Länge des Rohrkörpers (3) erstreckt.

4. Vereinzelungsvorrichtung nach Anspruch 2 oder 3, **dadurch gekennzeichnet, dass** die vordere Wand (4) fest mit dem Rohrkörper (3) verbunden ist und dass die hintere Wand (17) im Rohrkörper (3) längsverschiebbar ist und in jeder Längslage arretierbar ist.

5. Vereinzelungsvorrichtung nach einem der Ansprüche 1 bis 4, **dadurch gekennzeichnet, dass** der Schieber (8) über einen Hub- und Führungsmechanismus (9) zwischen der unteren Endlage und der oberen Endlage verschiebbar ist und dass die untere Endlage und die obere Endlage einstellbar sind.

6. Vereinzelungsvorrichtung nach einem der Ansprüche 1 bis 5, **dadurch gekennzeichnet, dass** der Schieber (8) aus einem Tragteil (22) und einem Schieberteil (23) lösbar zusammengesetzt ist und dass der Schieberteil (23) durch andere Schieberteile unterschiedlicher Länge ersetzbar ist.

7. Vereinzelungsvorrichtung nach einem der Ansprüche 1 bis 6, **dadurch gekennzeichnet, dass** die Längsrille (20) eine Breite aufweist, die im wesentlichen dem Durchmesser D der aufzunehmenden Stange (2) entspricht.

8. Vereinzelungsvorrichtung nach Anspruch 6 oder 7, **dadurch gekennzeichnet, dass** der ersetzbare Schieberteil (23) für die Entnahme von Stangen (2) mit einem Durchmesser (D), der kleiner ist als die Dicke des Schieberteils (23), mit geneigten, einen Keil bildenden Flächen (24, 25) versehen ist, die an die Längskanten der Längsrille (20) angrenzend sind.

9. Vereinzelungsvorrichtung nach einem der Ansprüche 1 bis 8, **dadurch gekennzeichnet, dass** im Grund der Längsrille (20) Ansaugbohrungen (26) angebracht sind, die mit einer Saugeinrichtung verbunden sind.

10. Vereinzelungsvorrichtung nach einem der Ansprüche 1 bis 9, **dadurch gekennzeichnet, dass** die Wegführeinrichtung aus einer Ausschiebeanordnung (10) besteht, die mit einem Ausschiebeteil (12) ausgestattet ist, welcher entlang der Längsrille (20) des in der oberen Endlage sich befindenden Schiebers (8) geführt bewegbar ist.

11. Vereinzelungsvorrichtung nach Anspruch 10, **dadurch gekennzeichnet, dass** die Ausschiebeanordnung (10) auf einem Halteteil (11) befestigt ist, welcher entlang des muldenförmigen Behälters verschiebbar ist und in jeder Lage arretierbar ist, und dass die Hubbewegung einstellbar ist.

12. Vereinzelungsvorrichtung nach einem der Ansprüche 1 bis 11, **dadurch gekennzeichnet, dass** ein Anschlagelement (16) vorgesehen ist, das so angeordnet ist, dass die vom Schieber (8) aus dem Behälter (3) entnommene Stange (2a) in der oberen Endlage des Schiebers (8) am Anschlagelement (16) zur Anlage kommt und die Stange (2a) durch die Längsrille (20) des Schiebers (8) und das Anschlagelement (16) verschiebbar gehalten ist.

13. Vereinzelungsvorrichtung nach Anspruch 12, **dadurch gekennzeichnet, dass** das Anschlagelement (16) einstellbar an der vorderen Wand (4) des muldenförmigen Behälters befestigt ist.
